# EUROPÄISCHE PATENTSCHRIFT

(11) **EP 1 429 933 B1**
(45) Veröffentlichungstag und Bekanntmachung des Hinweises auf die Patenterteilung: **04.05.2005**
(21) Anmeldenummer: 02800067.7
(22) Anmeldetag: 30.08.2002
(51) Int. Cl.: B60K 17/04, B60T 13/22

(54) **ANTRIEBSVORRICHTUNG**
DRIVE DEVICE
SYSTEME DE TRANSMISSION

(30) Priorität: 27.09.2001 DE 10147852
(43) Veröffentlichungstag der Anmeldung: 23.06.2004
(73) Patentinhaber: ZF FRIEDRICHSHAFEN Aktiengesellschaft, 88038 Friedrichshafen (DE)
(72) Erfinder: BUCK, Gerhard, 88048 Friedrichshafen (DE); EYMÜLLER, Helmut, 88046 Friedrichshafen (DE); STÜTZLE, Siegfried, 88045 Friedrichshafen (DE)
(86) Internationale Anmeldenummer: PCT/EP2002/009710
(87) Internationale Veröffentlichungsnummer: WO 2003/029038

(56) Entgegenhaltungen:
- EP-A- 1 038 715
- DE-A- 19 820 903
- GB-A- 1 537 997
- US-A- 4 181 042
- US-A- 4 186 626
- US-A- 5 151 068
- US-A- 5 267 915

## Beschreibung

Die Erfindung betrifft eine Antriebsvorrichtung nach der im Oberbegriff von Anspruch 1 näher definierten Art.

Antriebsvorrichtungen, bei welchen mindestens zwei Schalteinrichtungen vorhanden sind, welche über Federkraft im Schließsinne betätigbar und über hydraulischen Druck im Öffnungssinne betätigbar sind, werden häufig zum Antrieb von Baumaschinen, wie z. B. Mobilbagger, verwendet. Hierbei treibt vorzugsweise ein hydrostatischer Motor die Antriebsvorrichtung an, bei welcher durch Schalten der ersten oder zweiten Schalteinrichtung zwei Fahrbereiche wählbar sind. Die beiden Schalteinrichtungen sind im drucklosen Zustand durch Federkraft geschlossen und so vorzugsweise über ein Planetengetriebe miteinander verbunden, daß in diesem Zustand der Abtrieb drehfest gehalten ist und somit die Schalteinrichtungen im Sinne einer Feststellbremse betätigt sind.

Die DE 198 20 903 A1 offenbart eine Antriebsvorrichtung mit zwei hydraulisch schaltbaren Reibkupplungen, welche über hydraulischen Druck im Öffnungssinne und über Federkraft im Schließsinne betätigbar sind und welche im drucklosen Zustand als Feststellbremse wirken. Bei betätigter Feststellbremse besteht die Möglichkeit, durch manuelles Verkleinern eines Speicherraumes einen hydraulischen Druck aufzubauen, welcher über zwei Ventile den beiden Schalteinrichtungen zuführbar ist, und somit diese beiden Schalteinrichtungen gleichzeitig im Öffnungssinne betätigt, um das Fahrzeug, z. B. bei einem Defekt, abschleppen zu können. Bei dieser Antriebsvorrichtung gelangt über diese Ventile Druckmittel aus dem Speicherraum in die Schalteinrichtungen, welches sich somit mit diesem Druckmittel vermischt und die Schalteinrichtung verschmutzen kann. Der Speicherraum muß vollständig mit Druckmittel befüllt sein, welches eine aufwendige Entlüftung des Speicherraumes voraussetzt. Um die Antriebsvorrichtung vor Überdruck zu schützen, weist der Speicherkolben ein Überdruckventil auf, welches über eine Schlauchleitung mit einem Tank in Verbindung steht. Somit ist die Antriebsvorrichtung über eine zusätzliche Schlauchleitung mit dem Druckmittelreservoir zu verbinden.

Der vorliegenden Erfindung liegt die Aufgabe zugrunde, eine Antriebsvorrichtung zu schaffen, bei welcher zwei Schalteinrichtungen, welche im Schließsinne betätigt sind und somit den Abtrieb im Sinne einer Feststellbremse drehfest halten und diese auf einfache Weise im Öffnungssinne betätigen, um das Fahrzeug auch bei stehendem Antriebsmotor und somit nicht vorhandener Druckmittelversorgung bewegen zu können.

Die Aufgabe wird mit einer, auch die kennzeichnenden Merkmale des Hauptanspruchs aufweisenden, gattungsgemäßen Antriebsvorrichtung gelöst.

Erfindungsgemäß weist die Antriebsvorrichtung mindestens zwei Schalteinrichtungen, vorzugsweise Lamellenkupplungen, auf, welche über Federkraft im Schließsinne und über hydraulischen Druck im Öffnungssinne betätigbar sind, und welche bei beiden im Schließsinne betätigten Schalteinrichtungen über eine Vorrichtung im Öffnungssinne betätigbar sind, wobei die Vorrichtung einen mit Druck zu beaufschlagenden Kolben aufweist, welcher die beiden Schalteinrichtungen im Öffnungssinne betätigt. Vorzugsweise wird der Druck, welcher den Kolben der Vorrichtung betätigt, von einer Druckmittelquelle, wie z. B. eine Fettpresse oder Zentralschmieranlage, erzeugt, welche normalerweise bei einer Arbeitsmaschine im Bordwerkzeug vorhanden ist. Der Kolbenraum der Vorrichtung weist eine Zuleitung auf, welche an einer beliebigen Stelle der Antriebsvorrichtung angeordnet sein kann, so daß bei einer Befüllung dieser Zuleitung mit z. B. der Fettpresse diese am Fahrzeug gut zugänglich ist. Vorzugsweise sind die Kolben der Schalteinrichtungen der Antriebsvorrichtung koaxial zueinander angeordnet, wobei ein Kolben den Zylinder für den anderen Kolben bildet. Vorzugsweise ist der Kolben der Vorrichtung koaxial zu den Kolben der Schalteinrichtung angeordnet, wobei der Kolben der Vorrichtung zwei Anschlagflächen aufweist, von denen eine Anschlagfläche beim Bewegen des Kolbens der Vorrichtung den Kolben einer ersten Schalteinrichtung mitbewegt und eine andere Anschlagfläche des Kolbens der Vorrichtung über Übertragungselemente, z. B. Stifte, den Kolben der zweiten Schalteinrichtung bewegt. Die Übertragungselemente können innerhalb des Kolbens der ersten Schalteinrichtung angeordnet sein, wobei diese so anzuordnen sind, daß diese in keinen Druckraum der Kolben münden und somit keinerlei Dichtungen benötigen. Vorzugsweise ist der Bewegungsweg des Kolbens der Vorrichtung und die Länge der Übertragungselemente so ausgelegt, daß bei druckbeaufschlagtem Kolben der Vorrichtung und somit Erreichen seiner Endstellung die Übertragungselemente ausschließlich mit Federkraft des Kolbens der zweiten Schalteinrichtung beaufschlagt sind, wodurch eine unzulässige Verformung der Übertragungselemente ausgeschlossen ist. Der Kolbenraum des Kolbens der Vorrichtung ist vollständig druckflüssigkeitsdicht zu den Kolbenräumen der Schalteinrichtungen ausgeführt, wodurch auch bei Bewegungen dieses Kolbens eine Verschmutzung der Schalteinrichtungen ausgeschlossen ist. Vorzugsweise weist die Druckmittelzuführung zum Kolben der Vorrichtung ein Überdruckventil auf, wodurch bei Erreichen eines maximal eingestellten Druckniveaus das Druckmittel, z. B. Fett aus der Fettpresse, entweichen kann. Vorzugsweise wird das über das Überdruckventil entwichene Druckmittel an die Oberfläche der Antriebsvorrichtung geleitet. Somit ist bei austretendem Druckmittel erkennbar, daß die Schalteinrichtungen vollständig gelüftet sind. Die über das Druckmittel erzeugbare Kraft auf den Kolben der Vorrichtung ist so bemessen, daß bei vorhandener Druckversorgung im Fahrzeug und somit der Möglichkeit der Schaltung von Gängen die Kraft des Kolbens der Schalteinrichtung bei hydraulischer Betätigung größer ist als die Kraft des Kolbens der Vorrichtung, wodurch bei hydraulischer Betätigung der Schalteinrichtung der Kolben der Vorrichtung in seine Ausgangsstellung zurückgedrückt wird. Somit ist gewährleistet, daß bei funktionierenden Schalteinrichtungen die Fahrfunktion der Antriebsvorrichtung gewährleistet ist.

Indem der Druckraum des Kolbens der Vorrichtung druckmitteldicht ausgeführt ist und dieser Druckraum eine separate Zuführung aufweist, ist ausgeschlossen, daß die Schalteinrichtungen durch Betätigen der Vorrichtung verschmutzt werden. Die Zuführung weist einen Schmiernippel auf, der den Druckraum der Vorrichtung vorzugsweise über ein Rückschlagventil nach außen abdichtet. Ebenso entfällt ein aufwendiges Entlüften des Kolbenraums der Vorrichtung. Indem die Übertragungselemente außerhalb der Druckräume der Schalteinrichtungen angeordnet sind, entfällt die Abdichtung der Übertragungselemente. Die Dichtungen des Kolbens der Vorrichtung sind so angeordnet, daß diese beim normalen Betrieb der Antriebsvorrichtung und somit nicht betätigter Vorrichtung nur statisch beansprucht werden, wodurch diese Dichtungen nicht verschleißen. Indem der Kolben der Vorrichtung einen Teil des Zylinders der ersten Schalteinrichtung bildet und koaxial zum Kolben der ersten Schalteinrichtung angeordnet ist, wird eine sehr kompakte Antriebsvorrichtung geschaffen. Indem der Kolben der Vorrichtung direkt auf die Kolben der Schalteinrichtungen wirkt, kann die Feststellbremse der Antriebsvorrichtung auch im verspannten Zustand einfach geöffnet werden. Durch die Ableitung des Druckmittels nach dem Überdruckventil an die Oberfläche der Antriebsvorrichtung ist gewährleistet, daß bei betätigter Vorrichtung dieses durch Austreten des Druckmittels sofort erkennbar ist. Durch Verwendung einer einzigen Zuleitung zur Vorrichtung, welche an beliebiger Stelle der Antriebsvorrichtung angeordnet sein kann, ist es möglich, im Fahrzeug die Betätigung der Vorrichtung einfach anzuordnen. Indem die Kraft bei betätigter Schalteinrichtung auf die Kolben der Schalteinrichtung größer ist als die Kraft bei betätigter Vorrichtung auf den Kolben der Vorrichtung, ist gewährleistet, daß bei hydraulisch geschaltetem Gang die Vorrichtung in ihre Ausgangsstellung zurückgedrückt wird.

Weitere Vorteile sind der Figuren-Beschreibung zu entnehmen.

Es zeigen:
- Fig. 1: einen Ausschnitt der Antriebsvorrichtung mit den beiden Schalteinrichtungen und der Vorrichtung sowie axial angeordneten Übertragungselementen;

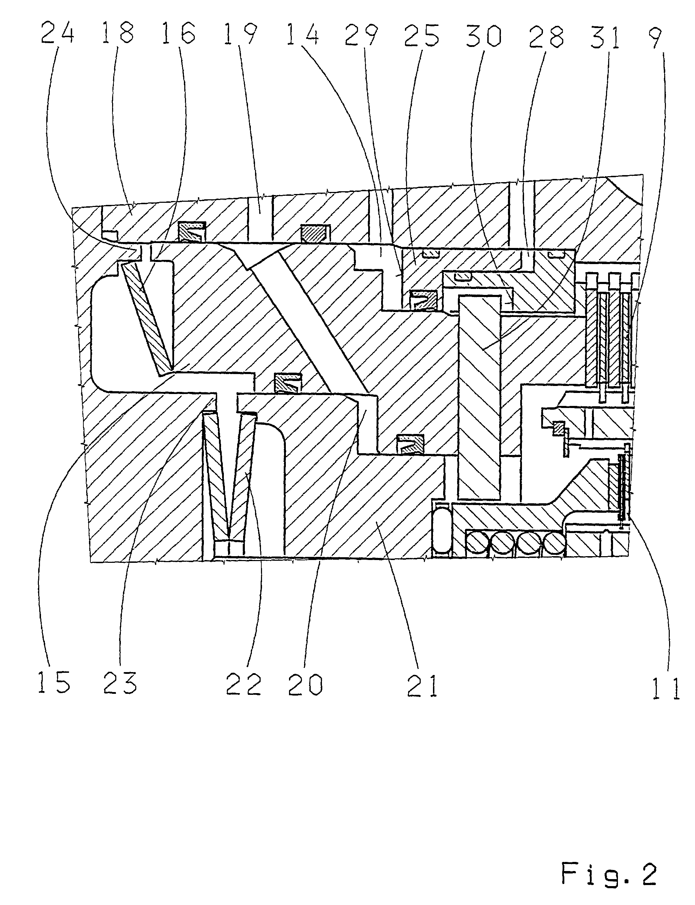

- Fig. 2: einen Ausschnitt der Antriebsvorrichtung mit beiden Schalteinrichtungen sowie radial angeordneten Übertragungselementen und

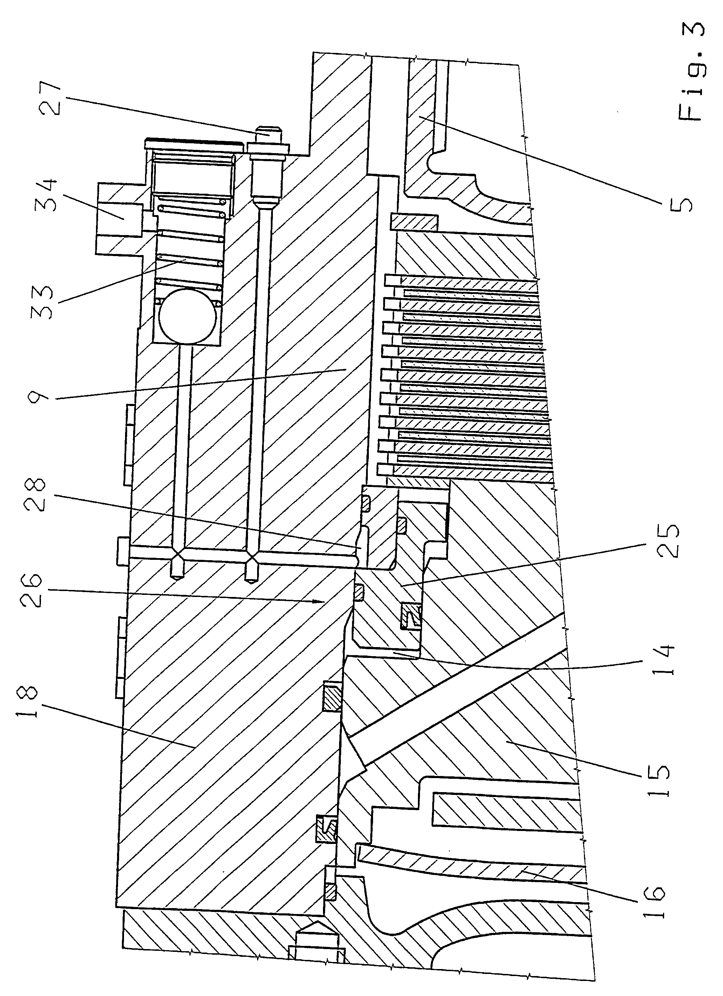

- Fig. 3: einen Ausschnitt der Antriebsvorrichtung nach Fig. 1 und einem Druckbegrenzungsventil.

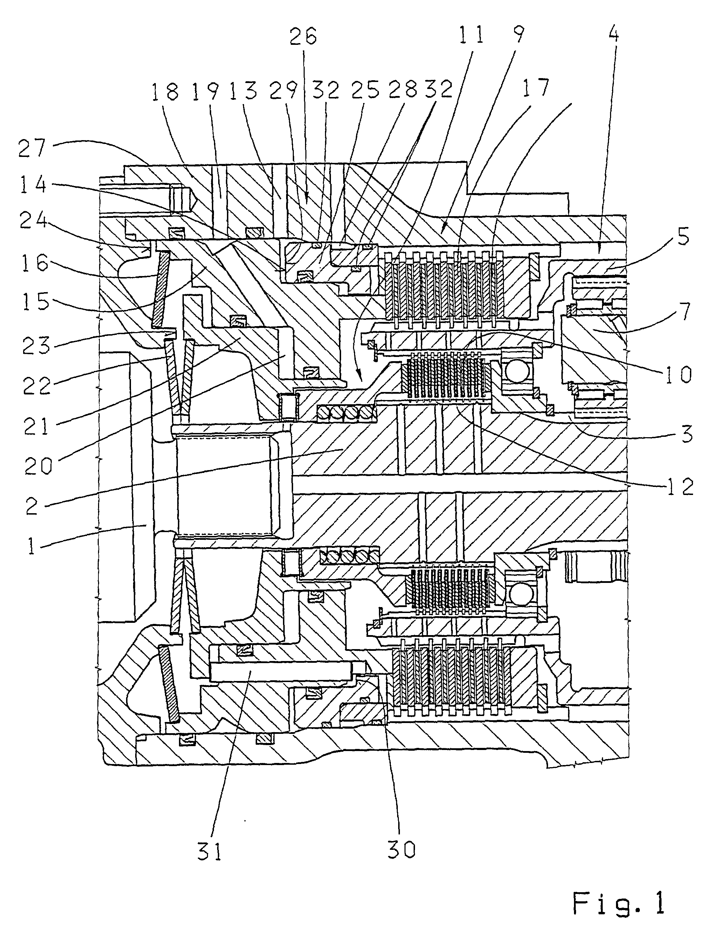

Fig. 1:
   Ein Antriebsmotor 1 treibt eine Antriebswelle 2 mit einem inneren Zentralrad 3 eines Planetengetriebes 4 an. Das äußere Zentralrad 5 ist mit einem Lamellenträger 6 verbunden. Der Planetenträger 7 bildet den Abtrieb des Planetengetriebes 4 und ist mit dem nicht dargestellten Abtrieb der Antriebsvorrichtung verbunden. Mit dem Lamellenträger 6 sind Innenlamellen 8 einer ersten Schalteinrichtung 9 verbunden. Die Außenlamellen 10 einer zweiten Schalteinrichtung 11 sind mit dem Lamellenträger 6 verbunden. Die Innenlamellen 12 der zweiten Schalteinrichtung 11 sind mit der Antriebswelle 2 verbunden. Um einen ersten Fahrbereich zu schalten, wird die erste Schalteinrichtung 9 im Schließsinne betätigt, indem die Leitung 13 und somit der Raum 14 drucklos geschaltet und somit der Kolben 15 durch die Kraft der Feder 16 verschoben wird, und die Innenlamellen 8 mit den Außenlamellen 17 und somit das äußere Zahnrad 5 mit dem Gehäuse 18 verbindet, und die Leitung 19 und der Raum 20 mit hydraulischem Druck beaufschlagt wird und somit der Kolben 21 gegen die Federkraft der Feder 22 bis zu seinem Anschlag 23 bewegt wird. Ein zweiter Fahrbereich wird geschaltet, indem die Leitung 13 mit Druck beaufschlagt und die Leitung 19 drucklos geschaltet wird. Somit bewegt sich der Kolben 15 gegen die Federkraft der Feder 16 bis zu seinem Anschlag 24 und der Kolben 21 wird über die Federkraft der Feder 22 so verschoben, daß die Innenlamellen 12 mit den Außenlamellen 10 und somit das Hohlrad 4 mit dem inneren Zentralrad 3 drehfest verbunden wird. Der Kolben 21 ist koaxial zum Kolben 15 und dem Kolben 25 der Vorrichtung 26 angeordnet. Der Kolben 15 bildet Zylinder für den Kolben 21 und der Kolben 25 bildet einen Teil des Zylinders für den Kolben 15. Indem im ersten Fahrbereich der Raum 20 druckbeaufschlagt ist und auf den Kolben 15 somit die Federkraft der Feder 16 und die Kraft aus der Druckbeaufschlagung des Raumes 20 wirkt, kann die Kraft der Feder 16 geringer ausgelegt werden. Im drucklosen Zustand des Raumes 14 und 20 werden die Kolben 15 und 21 über die Federkräfte der Federn 16 und 22 bewegt, so daß die erste Schalteinrichtung 9 und die zweite Schalteinrichtung 11 im Schließsinne betätigt werden. Ist die erste Schalteinrichtung 9 und die zweite Schalteinrichtung 11 im Schließsinne betätigt, so ist der Planetenträger 7 des Planetengetriebes 4 drehfest mit dem Gehäuse 18 verbunden. Somit ist in diesem Zustand die Funktion einer Feststellbremse erfüllt. Ist es nicht mehr möglich, die Feststellbremse durch Druckbeaufschlagung der Räume 14 oder 20 infolge einem Defekt im Fahrzeug zu lösen, wird über einen Anschluß 27, welcher an einem beliebigen Ort der Antriebsvorrichtung angeordnet sein kann, Druckmittel in den Raum 28 gefördert. Dies kann z. B. über eine im Bordwerkzeug vorhandene Fettpresse geschehen. Durch die Druckbeaufschlagung des Raumes 28 bewegt sich der Kolben 25 von seiner Ausgangslage so weit, bis seine erste Anlage 29 am Kolben 15 anliegt und somit diesen bewegt, und seine zweite Anlage 30 über Übertragungselemente 31 am Kolben 21 anliegt und diesen bewegt. Erreicht der Kolben 25 seine Endlage, so ist die erste Schalteinrichtung 9 und die zweite Schalteinrichtung 11 vollständig im Öffnungssinne betätigt, wodurch das Fahrzeug abgeschleppt werden kann. Die Länge der Übertragungselemente ist so ausgelegt, daß die Endlage des Kolbens 25 dadurch bestimmt wird, daß die Anlage 29 am Kolben 15 und der Kolben 15 am Anschlag 24 anliegt, wobei der Kolben 21 den Anschlag 23 noch nicht erreicht hat. Somit ist gewährleistet, daß die Übertragungselemente 31 ausschließlich mit Federkraft der Feder 22 beaufschlagt werden. Die Übertragungselemente 31 befinden sich radial außerhalb des Raumes 20 und radial innerhalb des Raumes 28 und des Raumes 14. Somit ist es nicht notwendig, die Übertragungselemente 31 mit Dichtmittel zu versehen. Die Dichtmittel 32, welche den Raum 28 abdichten, werden im normalen Betriebszustand nicht mit Druck beaufschlagt und sind ausschließlich statisch beansprucht, da zum Schalten der ersten Schalteinrichtung 9 oder zum Schalten der zweiten Schalteinrichtung 11 der Kolben 25 nicht bewegt wird. Ist bei betätigter Vorrichtung 26 das Fahrzeug wieder betriebsbereit und der zweite Fahrbereich wird geschaltet, so wird der Kolben 25 durch Druck im Kolbenraum 14 wieder in seine Ausgangslage zurückbewegt. Vorzugsweise wird hierbei durch das Herausschrauben des Druckbegrenzungsventils 33 der Kolbenraum 28 drucklos. Die Kolben 15 und 21 sowie der Kolben 25 sind so angeordnet, daß diese ausschließlich lineare Bewegungen und keine Rotationsbewegung ausführen. Dies wirkt sich vor allem auf den Verschleiß der Dichtelemente aus.
Fig. 2:
   Ein erster Fahrbereich wird geschaltet, indem der Raum 20 mit Druck beaufschlagt wird. Somit bewegt sich der Kolben 15 durch die Federkraft der Feder 16 und den Druck im Raum 20, wodurch die erste Schalteinrichtung 9 im Schließsinne betätigt wird. Mit der ersten Schalteinrichtung 9 und der zweiten Schalteinrichtung 11 ist ein Planetengetriebe 4, wie in der Fig. 1 dargestellt, verbunden. Ein zweiter Fahrbereich wird geschaltet, indem der Raum 20 drucklos und der Raum 14 mit Druck beaufschlagt wird. Somit bewegt sich der Kolben 21 durch die Federkraft der Feder 22 und betätigt die zweite Schalteinrichtung 11 im Schließsinne und der Kolben 15 bewegt sich gegen die Federkraft der Feder 16 und betätigt die erste Schalteinrichtung 9 im Öffnungssinne. Sind die erste Schalteinrichtung 9 und die zweite Schalteinrichtung 11 im Schließsinne betätigt und somit die Räume 20 und 14 drucklos geschaltet, so besteht die Möglichkeit, durch Druckbeaufschlagung des Raums 28 den Kolben 25 zu bewegen, welcher über seinen ersten Anschlag 29 den Kolben 15 und über das radial angeordnete Übertragungselement 31, welches im Kolben 15 angeordnet ist, den Kolben 21 bewegt, und somit die Schalteinrichtungen 9 und 11 im Öffnungssinne betätigt werden. Somit werden die Kolben 15 und 21 über Kraftschluß bewegt. Somit ist das Lüften der Kolben 15 und 21 auch bei defekten Dichtungen der Schalteinrichtungen 9 und 11 möglich. Die Endstellung des Kolbens 25 wird über die Anlage 29 und den Anschlag 24 sowie den Kolben 15 bestimmt. Diese Endstellung ist so ausgelegt, daß diese zuvor erreicht wird, bevor das Übertragungselement 31 den Kolben 21 bis zu seinem Anschlag 23 bewegt. Somit ist gewährleistet, daß auf das Übertragungselement 31 nur die Federkraft der Feder 22 wirkt.
Fig. 3:
   Über den Anschluß 27 wird Druckmittel, z. B. Fett aus einer Fettpresse oder Öl aus einer Druckmittelquelle, in den Raum 28 gefördert. Um keine unzulässig hohen Drücke im Raum 28 entstehen zu lassen, ist mit dem Raum 28 ein Druckbegrenzungsventil 33 verbunden, über welches oberhalb eines definierten Druckniveaus Druckmittel über eine Öffnung 34 im Gehäuse 18 entweichen kann. Somit ist gewährleistet, daß von außen die vollständige Öffnung der ersten Schalteinrichtung 9 und der zweiten Schalteinrichtung 11 durch Austreten von Druckmittel aus der Öffnung 34 ersichtlich ist.

### Bezugszeichen

- 1: Antriebsmotor
- 2: Antriebswelle
- 3: inneres Zentralrad
- 4: Planetengetriebe
- 5: äußeres Zentralrad
- 6: Lamellenträger
- 7: Planetenträger
- 8: Innenlamellen
- 9: erste Schalteinrichtung
- 10: Außenlamellen
- 11: zweite Schalteinrichtung
- 12: Innenlamellen
- 13: Leitung
- 14: Raum
- 15: Kolben
- 16: Feder
- 17: Außenlamellen
- 18: Gehäuse
- 19: Leitung
- 20: Raum
- 21: Kolben
- 22: Feder
- 23: Anschlag
- 24: Anschlag
- 25: Kolben
- 26: Vorrichtung
- 27: Anschluß
- 28: Raum
- 29: erste Anlage
- 30: zweite Anlage
- 31: Übertragungselemente
- 32: Dichtmittel
- 33: Druckbegrenzungsventil
- 34: Öffnung

## Patentansprüche

1. Antriebsvorrichtung mit mindestens einer ersten Schalteinrichtung (9) und einer zweiten Schalteinrichtung (11), bei welchen je eine Kupplung durch Federkraft im Schließsinne und durch hydraulischen Druck im Öffnungssinne betätigbar ist, wobei bei in gleichzeitigem Schließsinn betätigter Kupplung der ersten Schalteinrichtung (9) und zweiten Schalteinrichtung (11) ein Abtrieb (7) im Sinne einer Feststellbremse drehfest gehalten ist, mit einer Vorrichtung (26) zum gleichzeitigen Öffnen der ersten Schalteinrichtung (9) und der zweiten Schalteinrichtung (11), **dadurch gekennzeichnet, daß** die Vorrichtung (26) zum gleichzeitigen Öffnen der ersten Schalteinrichtung (9) und der zweiten Schalteinrichtung (11) einen druckbeaufschlagbaren Kolben (25) aufweist, welcher im druckbeaufschlagten Zustand bei in gleichzeitigem Schließsinne betätigten Kupplungen diese im Öffnungssinne betätigt.

2. Antriebsvorrichtung nach Anspruch 1, **dadurch gekennzeichnet, daß** die Kupplung der ersten Schalteinrichtung (9) einen Kolben (15) aufweist, in welchem Übertragungselemente (31) angeordnet sind, über welche Bewegungen des Kolbens (25) der Vorrichtung (26) auf den Kolben (21) der zweiten Betätigungseinrichtung (11) übertragbar sind.

3. Antriebsvorrichtung nach Anspruch 1, **dadurch gekennzeichnet, daß** der Druck zum Betätigen der Vorrichtung (26) von einer Druckmittelquelle erzeugt wird.

4. Antriebsvorrichtung nach Anspruch 1, **dadurch gekennzeichnet, daß** die Vorrichtung (26) Mittel zum Begrenzen des Druckes (33), mit welchen der Kolben (25) beaufschlagbar ist, aufweist, wobei überschüssiges Druckmittel an die Oberfläche (34) der Antriebsvorrichtung geleitet wird.

5. Antriebsvorrichtung nach Anspruch 1, **dadurch gekennzeichnet, daß** in der ersten Schalteinrichtung (9) ein Kolben (15) angeordnet ist, welcher koaxial zu einem Kolben (21) der zweiten Schalteinrichtung (11) und koaxial zum Kolben (25) der Vorrichtung (26) angeordnet ist.

6. Antriebsvorrichtung nach Anspruch 5, **dadurch gekennzeichnet, daß** der Kolben (15) der ersten Schalteinrichtung (9) einen Zylinder für den Kolben (21) der zweiten Schalteinrichtung (11) und der Kolben (25) der Vorrichtung (26) einen Teil eines Zylinders der ersten Schalteinrichtung (9) bildet.

7. Antriebsvorrichtung nach Anspruch 2, **dadurch gekennzeichnet, daß** der Kolben (25) der Vorrichtung (26) nur so weit verschiebbar ist, daß auf den Kolben (21) der zweiten Schalteinrichtung (11) ausschließlich Federkraft wirkt.

8. Antriebsvorrichtung nach Anspruch 1, **dadurch gekennzeichnet, daß** beim Betätigen der Vorrichtung (26) die Kolben 15 und 21 über Kraftschluß bewegt werden.

9. Antriebsvorrichtung nach Anspruch 1, **dadurch gekennzeichnet, daß** das Lüften der beiden Schalteinrichtungen (9, 11) auch bei defekter Dichtung der Schalteinrichtung möglich ist.

## Claims

1. Drive device with at least one first shift mechanism (9) and one second shift mechanism (11), in which a respective clutch can be operated by spring force in the engaging direction and by hydraulic pressure in the disengaging direction, wherein, when the clutch of the first shift mechanism (9) and the clutch of the second shift mechanism (11) are simultaneously operated in the engaging direction, an output drive (7) is held so as to be non-rotatable in the sense of a parking brake, with a device (26) for simultaneously disengaging the first shift mechanism (9) and the second shift mechanism (11), **characterised in that** the device (26) for simultaneously disengaging the first shift mechanism (9) and the second shift mechanism (11) comprises a piston (25) which can be pressurised and which, when in the pressurised state and the clutches are simultaneously operated in the engaging direction, operates these clutches in the disengaging direction.

2. Drive device according to Claim 1, **characterised in that** the clutch of the first shift mechanism (9) comprises a piston (15) in which transmission elements (31) are disposed, via which elements movements of the piston (25) of the device (26) can be transmitted to the piston (21) of the second operating mechanism (11).

3. Drive device according to Claim 1, **characterised in that** the pressure for operating the device (26) is produced by a pressure medium source.

4. Drive device according to Claim 1, **characterised in that** the device (26) comprises pressure-limiting means (33) which can act on the piston (25), wherein excess pressure medium is routed to the surface (34) of the drive device.

5. Drive device according to Claim 1, **characterised in that** a piston (15) is disposed in the first shift mechanism (9), which piston is disposed coaxially with a piston (21) of the second shift mechanism (11) and coaxially with the piston (25) of the device (26).

6. Drive device according to Claim 5, **characterised in that** the piston (15) of the first shift mechanism (9) forms a cylinder for the piston (21) of the second shift mechanism (11) and the piston (25) of the device (26) forms a part of a cylinder of the first shift mechanism (9).

7. Drive device according to Claim 2, **characterised in that** the piston (25) of the device (26) can only be displaced so far that only spring force acts on the piston (21) of the second shift mechanism (11).

8. Drive device according to Claim 1, **characterised in that** the pistons 15 and 21 are moved through frictional engagement when the device (26) is operated.

9. Drive device according to Claim 1, **characterised in that** the two shift mechanisms (9, 11) can also be ventilated if the seal of the shift mechanism is defective.

## Revendications

1. Dispositif d'entraînement avec au moins un premier dispositif d'enclenchement (9) et un second dispositif d'enclenchement (11), dans chacun desquels un embrayage peut être actionné par la force d'un ressort dans le sens de la fermeture et par une pression hydraulique dans le sens de l'ouverture, une sortie (7) étant maintenue fixe en rotation dans le sens d'un frein d'immobilisation, lorsque les embrayages du premier dispositif d'enclenchement (9) et du second dispositif d'enclenchement (11) sont actionnés simultanément dans le sens de fermeture, avec un dispositif (26) d'ouverture simultanée du premier dispositif d'enclenchement (9) et du second dispositif d'enclenchement (11), **caractérisé en ce que** le dispositif (26) comprend, pour l'ouverture simultanée du premier dispositif d'enclenchement (9) et du second dispositif d'enclenchement (11), un piston (25) pouvant être alimenté en pression qui, dans l'état alimenté en pression, lorsque les embrayages sont actionnés simultanément dans le sens de la fermeture, actionne ceux-ci dans le sens de l'ouverture.

2. Dispositif d'entraînement selon la revendication 1, **caractérisé en ce que** l'embrayage du premier dispositif d'enclenchement (9) comprend un piston (15) dans lequel se trouvent des éléments de transmission (31) par l'intermédiaire desquels les mouvements du piston (25) du dispositif (26) peuvent être transmis au piston (21) du second dispositif d'enclenchement (11).

3. Dispositif d'entraînement selon la revendication 1, **caractérisé en ce que** la pression d'actionnement du dispositif (26) est générée par une source de fluide sous pression.

4. Dispositif d'entraînement selon la revendication 1, **caractérisé en ce que** le dispositif (26) comprend un moyen de limitation de la pression (33) avec laquelle le piston (25) est alimenté, le fluide sous pression en excès étant conduit vers la surface (34) du dispositif d'entraînement.

5. Dispositif d'entraînement selon la revendication 1, **caractérisé en ce que**, dans le premier dispositif d'enclenchement (9) se trouve un piston (15) qui est coaxial à un piston (21) du second dispositif d'enclenchement (11) et coaxial au piston (25) du dispositif (26).

6. Dispositif d'entraînement selon la revendication 5, **caractérisé en ce que** le piston (15) du premier dispositif d'enclenchement (9) constitue un cylindre pour le piston (21) du second dispositif d'enclenchement (11) et le piston (25) du dispositif (26) constitue une partie d'un cylindre du premier dispositif d'enclenchement (9).

7. Dispositif d'entraînement selon la revendication 2, **caractérisé en ce que** le piston (25) du dispositif (26) n'est mobile que jusqu'à ce qu'une force exclusivement élastique agisse sur le piston (21) du second dispositif d'enclenchement (11).

8. Dispositif d'entraînement selon la revendication 1, **caractérisé en ce que**, lors de l'actionnement du dispositif (26), le piston (15) et le piston (21) sont déplacés avec une transmission de force.

9. Dispositif d'entraînement selon la revendication 1, **caractérisé en ce que** la ventilation des deux dispositifs d'enclenchement (9, 11) est possible également avec une étanchéité défectueuse du dispositif d'enclenchement.
